# EUROPÄISCHE PATENTANMELDUNG

(11) **EP 4 279 892 A1**
(43) Veröffentlichungstag der Anmeldung: **22.11.2023**
(21) Anmeldenummer: 22173892.5
(22) Anmeldetag: 17.05.2022
(51) Int. Cl.: G01M 1/04

(54) **MESSVORRICHTUNG ZUR VERMESSUNG VON REIFEN HINSICHTLICH UNWUCHT UND GLEICHFÖRMIGKEIT**

(71) Anmelder: Hofmann Maschinen- und Anlagenbau GmbH, 67550 Worms (DE)
(72) Erfinder: Bork, Bernhard, 64579 Gernsheim (DE); Furchtbar, Felix, 67591 Westhofen (DE)
(74) Vertreter: Tergau & Walkenhorst Intellectual Property GmbH

(57) **Zusammenfassung**

Messvorrichtung zur Vermessung von Reifen (18), insbesondere von Kraftfahrzeugreifen, hinsichtlich Unwucht und/oder Gleichförmigkeit, soll bei einfach und kompakt gehaltenem Aufbau eine zuverlässige Vermessung des Reifens (18) ermöglichen. Dazu ist erfindungsgemäß eine derartige Messvorrichtung vorgesehen mit einer in einem topfförmigen oder hohlzylindrischen Wellengehäuse (11) gelagerten Messwelle (12), die an einem aus dem Wellengehäuse (11) herausragenden Ende eine Aufnahme für einen Reifen (18) aufweist, wobei die Messwelle (12) eine senkrecht ausgerichtete Drehachse (27) aufweist, wobei von dem Wellengehäuse (11) eine angeformte oder fest mit ihm verbundene Grundplatte (10) radial absteht, wobei sich die Grundplatte (10) mittels einer Mehrzahl von über ihren Umfang verteilt angeordneten, vertikal ausgerichteten Stützen (31)auf einem Maschinenbett (19) abstützt, wobei die Axialsteifigkeit der jeweiligen Stütze (31) deutlich größer als ihre Quersteifigkeit ist, und wobei der jeweiligen Stütze (31) ein vertikaler Kraftaufnehmer (22) zur sensorischen Erfassung einer auf die Grundplatte (10) im Bereich der Stütze (31) einwirkenden vertikalen Kraftkomponente zugeordnet ist.

## Beschreibung

Die Erfindung betrifft eine Messvorrichtung zur Vermessung von Reifen, insbesondere von Kraftfahrzeugreifen, hinsichtlich Unwucht und/oder Gleichförmigkeit.

Aus der EP 0 897 107 A2 ist eine auch als Messstand bezeichnete Vorrichtung zur Vermessung eines Reifens bekannt. Diese und ähnliche Anlagen sind üblicherweise für den Einsatz bei Reifenherstellern für Personenkraftwagen und (Leicht-) Lastkraftwagen konzipiert. Schwerpunktmäßig werden auf einer derartigen Anlage die Vermessung hinsichtlich Geometrie, Gleichförmigkeit sowie auch das Auswuchten des Reifens vollzogen. Im Anschluss können in nachgeschalteten Anlagenkomponenten wichtige Markierpunkte mit Hilfe einer Markierstation gesetzt und die geprüften und markierten Reifen durch einen Hubsortierer oder dergleichen ausgeschleust werden.

Ein Vorteil der genannten Messvorrichtung ist, dass auf ein- und derselben Maschine sowohl eine Unwuchtmessung als auch eine Gleichförmigkeitsmessung erfolgen kann. Zur Unwuchtmessung werden Fliehkräfte, welche aus der Reifen- bzw. Radunwucht resultieren, erfasst und für einen Unwuchtausgleich ausgewertet. Zur Gleichförmigkeitsmessung werden Reaktionskräfte gemessen, die in der Berührungsfläche zwischen einem Druckrad und dem daran abrollenden Reifen auftreten.

Nachteilig bei dieser Messvorrichtung ist unter anderem, dass in einer ersten Variante relativ teure und komplexe Mehrkomponenten-Kraftaufnehmer sowohl an der Messwelle als auch am Druckrad verwendet werden, und dass in einer zweiten Variante eine Gleichförmigkeitsmessung nicht mit der gewünschten Genauigkeit durchgeführt werden kann, weil über mittig angebrachte Federelemente ein die Messung störender Kraftnebenschluss entsteht.

Aufgabe der Erfindung ist es, eine Messvorrichtung der genannten Art anzugeben, die bei einfach und kompakt gehaltenem Aufbau eine zuverlässige Vermessung eines Reifens, insbesondere eines Kraftfahrzeugreifens, hinsichtlich Unwucht und Gleichförmigkeit ermöglicht.

Die genannte Aufgabe wird erfindungsgemäß gelöst durch eine Messvorrichtung mit den Merkmalen des Anspruchs 1.

Demnach ist eine Messvorrichtung zur Vermessung von Reifen, insbesondere von Kraftfahrzeugreifen, hinsichtlich Unwucht und/oder Gleichförmigkeit vorgesehen, mit einer in einem topfförmigen oder hohlzylindrischen Wellengehäuse gelagerten Messwelle, die an einem aus dem Wellengehäuse herausragenden Ende eine Aufnahme für einen Reifen aufweist, wobei die Messwelle eine senkrecht ausgerichtete Drehachse aufweist, wobei von dem Wellengehäuse eine angeformte oder fest mit ihm verbundene Grundplatte radial absteht, wobei sich die Grundplatte mittels einer Mehrzahl von über ihren Umfang verteilt angeordneten, vertikal ausgerichteten Stützen auf einem Maschinenbett abstützt, wobei die Axialsteifigkeit der jeweiligen Stütze deutlich größer als ihre Quersteifigkeit ist, und wobei der jeweiligen Stütze ein vertikaler Kraftaufnehmer zur sensorischen Erfassung einer auf die Stütze (oder eine auf die Grundplatte im Bereich der Stütze) einwirkenden vertikalen Kraftkomponente zugeordnet ist.

Auf diese Weise ist eine genügend weiche, quasi schwimmende Lagerung des Wellengehäuses auf dem Maschinenbett verwirklicht, die eine einfache und bereits nach Komponenten zerlegte Erfassung von durch Reifenunwucht und/oder Ungleichförmigkeit verursachten, auf die Messwelle einwirkenden Verschiebungsund Neigekräften ermöglicht, die dennoch den betrieblichen Belastungen zuverlässig standhält und stabil genug ist. Der konstruktive Aufbau ist einfach und kompakt.

Das Kriterium, wonach die Axialsteifigkeit der jeweiligen Stütze deutlich größer als ihre Quersteifigkeit ist, bedeutet quantitativ bevorzugt einen Faktor > 10 oder noch besser > 20 oder mehr.

In einer vorteilhaften Ausführung sind drei oder vier Stützen mit zugeordneten Kraftaufnehmern über den Umfang der Grundplatte hinweg verteilt angeordnet. Die Kraftaufnehmer sind somit in der Draufsicht auf die Messvorrichtung von oben bevorzugt in einer symmetrischen Dreiecks- oder Rechteck-, insbesondere Quadratkonfiguration um die Messwelle herum angeordnet, was die messtechnischen Auswertungen vereinfacht.

Vorteilhafterweise weist die jeweilige Stütze zur Verwirklichung der genannten Steifigkeitsverhältnisse einen vertikal ausgerichteten Biegestab auf, der bevorzugt eine Anzahl von Einschnürungen aufweist.

Der jeweilige vertikale Kraftaufnehmer ist vorzugsweise - je nach Typ - in die ihm zugeordnete Stütze integriert oder liegt an ihr an. Bevorzugt ist er durch ein federartiges Vorspannelement vorgespannt, um sowohl Zug- als auch Druckkräfte erfassen zu können. Weiterhin ist der jeweilige vertikale Kraftaufnehmer bevorzugt ein Einkomponenten-Kraftaufnehmer, der bauartbedingt eine Zug- oder Druckkraft in genau einer Raumrichtung erfasst. Der Kraftaufnehmer kann ein Dehnungsmessstreifen sein, bevorzugt ist er jedoch vom Typ Piezo-Kraftaufnehmer.

Des Weiteren ist vorteilhafterweise zwischen der Grundplatte und einem auf dem Maschinenbett angeordneten Lagerblock oder dergleichen ein horizontaler Kraftaufnehmer zur sensorischen Erfassung einer auf die Grundplatte einwirkenden horizontalen Kraftkomponente angeordnet. Für die möglichen Typen und deren Funktionsweise gilt das oben für die vertikalen Kraftaufnehmer Gesagte.

In bevorzugter Ausgestaltung stützt sich die Grundplatte über zumindest eine Drehmomentstütze in solcher Weise auf dem Maschinenbett ab, dass ein durch den Antrieb für die Messwelle bewirktes Antriebsmoment kompensiert wird, sonstige auf die Grundplatte einwirkenden Kraftkomponenten jedoch möglichst wenig beeinflusst werden. Zu diesem Zweck kann die Drehmomentstütze in bevorzugter Ausgestaltung mindestens einen in Tangentialrichtung bezüglich der Messwelle an der Grundplatte angreifenden, horizontal ausgerichteten Biegestab aufweisen, dessen Axialsteifigkeit deutlich größer als seine Quersteifigkeit ist, und der bevorzugt eine Anzahl von Einschnürungen aufweist. Es gilt auch hier das oben für die vertikalen Stützen genannte bevorzugte quantitative Kriterium.

Für die Durchführung von Gleichförmigkeitsmessungen weist die Messvorrichtung zweckmäßigerweise ein Druckrad auf, welches beispielsweise mittels eines verfahrbaren Schlittens mit einem in der Aufnahme der Messwelle fixierten Reifen in Kontakt bringbar ist. In diesem Fall ist der oben erwähnte horizontale Kraftaufnehmer bevorzugt entlang der Verbindungslinie zwischen der Drehachse der Messwelle und der Drehachse des Druckrades ausgerichtet, so dass erfasst wird, wie sich die Messwelle tendenziell auf das Druckrad zu- oder von ihm wegbewegt.

In einer bevorzugten Ausgestaltung ist in dem Wellengehäuse ein Direktantrieb, vorzugsweise ein Torquemotor, für die Messwelle angeordnet. Dies lässt eine kompakte Bauweise mit hohem Antriebsmoment und besonders gut steuerbarer und gleichmäßiger Drehzahl der Messwelle zu.

Für eine besonders konsequente Umsetzung des Messprinzips stützt sich das Wellengehäuse ausschließlich über die Grundplatte und die vertikalen und(oder horizontalen Stützen sowie über gegebenenfalls vorhandene Drehmomentstützen, aber nicht direkt selbst auf dem Maschinenbett ab.

Der Messvorrichtung ist vorteilhafterweise eine Auswertungsvorrichtung zugeordnet, die aus Messignalen der vertikalen Kraftaufnehmer und eines oder mehrerer gegebenenfalls vorhandener horizontaler Kraftaufnehmer für die Unwucht und/oder Gleichförmigkeit eines Reifens charakteristische Kenngrößen ermittelt. Kraftaufnehmer am Druckrad werden dafür nicht benötigt.

Die mit der Erfindung erzielten Vorteile bestehen insbesondere darin, dass mit ein- und derselben Maschine und mit ein- und derselben Messanordnung oder Messtechnik sowohl eine Unwuchtmessung als auch eine Gleichförmigkeitsmessung erfolgen kann. Dabei können durchgängig günstige Einkomponenten-Messaufnehmer verwendet werden. Durch die besondere Konstruktion werden unerwünschte Kraftnebenschlüsse auf ein Minimum reduziert.

Verschiedene Ausführungsbeispiele der Erfindung werden nachfolgend anhand der beigefügten Zeichnungen näher erläutert. Es zeigt:
- FIG. 1: eine Messvorrichtung zur Vermessung eines Reifens hinsichtlich Unwucht und Gleichförmigkeit in perspektivischer Ansicht,
- FIG. 2: eine Draufsicht auf die Messvorrichtung gemäß FIG. 1,
- FIG. 3: einen Schnitt durch eine ein Druckrad enthaltende Baugruppe der Messvorrichtung gemäß Schnittline A-A in FIG. 2,
- FIG. 4: einen Schnitt durch einen eine Messwelle enthaltenden Teil der Messvorrichtung gemäß Schnittline B-B in FIG. 2,
- FIG. 5: einen Schnitt durch einen eine Messwelle enthaltenden Teil der Messvorrichtung gemäß Schnittline C-C in FIG. 2,
- FIG. 6: verschiedene Ausführungen von vertikalen Stützen mit jeweils integriertem Kraftaufnehmer,
- FIG. 7: eine das Messprinzip verdeutlichende Ansicht einer Messwelle mit zugehörigen Kraftaufnehmern in einer ersten Konfiguration,
- FIG. 8: eine das Messprinzip verdeutlichende Ansicht einer Messwelle mit zugehörigen Kraftaufnehmern in einer zweiten Konfiguration,
- FIG. 9: eine Ansicht einer Messwelle mit zugehöriger vorderer Drehmomentstütze,
- FIG. 10: eine Ansicht einer Messwelle mit zugehöriger hinterer Drehmomentstütze,
- FIG. 11: drei Varianten einer Drehmomentstütze, und
- FIG. 12: zwei weitere Varianten einer Drehmomentstütze.

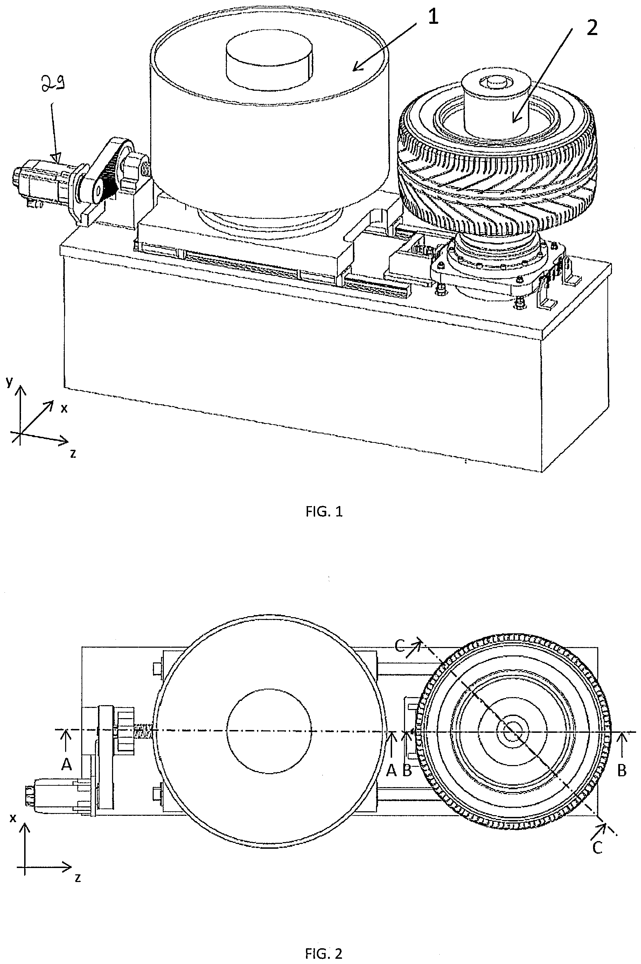

Die in FIG. 1 in perspektivischer Ansicht und in FIG. 2 in Draufsicht von oben dargestellte Messvorrichtung dient der Vermessung eines Reifens 18, insbesondere eines Kraftfahrzeugreifens, hinsichtlich Unwucht und Gleichförmigkeit (eng. Uniformity). Unwucht ist im Wesentlichen ein Phänomen unsymmetrischer Massenverteilung im Reifen 18 und kann sich in Unwuchtkräften sowie in Unwuchtmomenten äußern, wenn sich der Reifen 18 dreht. Die Unwuchtkräfte und -momente nehmen mit zunehmender Drehzahl zu. Gleichförmigkeit hingegen bezieht sich auf Kräfte und Momente, wenn der Reifen 18 auf einer Fahrbahn abrollt, und die im Wesentlichen durch geometrische Abweichungen von der Idealform und/oder durch eine inhomogene Verteilung von Elastizität oder Härte im Reifen 18 hervorgerufen werden. Derartige Effekte machen sich schon bei relativ kleinen Drehzahlen bemerkbar.

Zur Vermessung oder Prüfung von Unwucht und/oder (Un-) Gleichförmigkeit, weist die Messvorrichtung gemäß FIG. 1 eine mit einem Antrieb gekoppelte, vertikal ausgerichtete Messwelle 12 auf, an deren oberem Ende eine Reifenaufnahme 16, 17 angebracht ist. In der Reifenaufnahme 16, 17 wird der zu vermessenden Reifen 18 mit Hilfe von zwei Messfelgenhälften liegend, also mit vertikaler Drehachse 27 eingespannt. Der im unteren Bereich der Messwelle 12 angeordnete, in FIG. 1 durch das Maschinengehäuse verdeckte Antrieb versetzt die Messewelle 12 mitsamt dem montierten Reifen 18 in eine Drehbewegung. Eine zugeordnete Anlagensteuerung regelt insbesondere die Drehgeschwindigkeit und überwacht die weiter unten beschriebenen Messvorgänge. Zur Gleichförmigkeitsmessung ist ferner ein auf einem horizontal verfahrbaren Schlitten 28 montiertes Druckrad 8 mit vertikaler Drehachse 6 vorhanden, welches mit Hilfe des Schlittens 28 mit definierter Andruckkraft in Richtung Reifen 18 verfahren und mit ihm in Kontakt gebracht werden kann. Dadurch wird bedarfsweise das Abrollen des Reifens 18 auf einer Fahrbahn oder einem sonstigen Untergrund simuliert. Das Druckrad 8 kann mit einem eigenen Antrieb ausgestattet sein oder alternativ - und hier bevorzugt - rein passiv durch Kontakt mit dem drehenden Reifen 18 mitdrehen. Für eine reine Unwuchtmessung wird das Druckrad 8 mit Hilfe des Schlittens 28 vom Reifen 18 weggefahren und entkoppelt. Zum Verfahren des Schlittens 28 ist ein Verstellantrieb 29 vorgesehen.

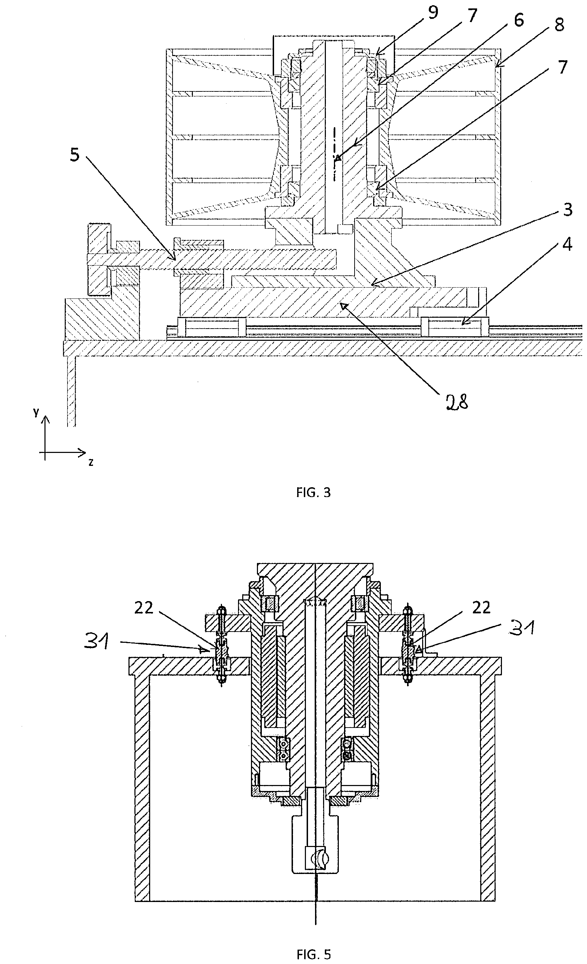

FIG. 3 zeigt einen Schnitt durch den das Druckrad 8 enthaltenden Teil der Messvorrichtung, gemäß Schnittline A-A in der Draufsicht von FIG. 2. Der Schlitten 28 mit der horizontal ausgerichteten Trägerplatte 3 ist entlang einer beispielsweise durch Schienen verwirklichten Linearführung 4 in horizontaler Richtung z auf die Messwelle 12 zu oder von ihr weg verfahrbar. Der dazu vorgesehene Verstellantrieb 29 weist hier im Beispiel eine Antriebsspindel 5 auf, die mit einer auf der Trägerplatte 3 montierten Spindelmutter zusammenwirkt. Auf der Trägerplatte 3 ist das Druckrad 8 mit Hilfe einer Lagerung 7 mit vertikaler (längs y-Richtung ausgerichteter) Drehachse 6 gelagert. Der durch den Schlitten 28 realisierbare Verfahrweg des Druckrads 8 in z-Richtung liegt genau auf der Verbindungslinie der Drehachsen 6, 27 von Druckrad 8 und Messwelle 12, wie aus FIG. 2 ersichtlich ist. Wie bereits erwähnt, kann der Schlitten 28 so weit in Richtung der Messwelle 12 verfahren werden, dass das Druckrad 8 mit dem auf der Messwelle 12 montierten Reifen 12 in Kontakt kommt und mit ihm mitdreht. Eine Winkelmessvorrichtung 9 erfasst den Drehwinkel des Druckrades 8 gegenüber einer Referenzlage, so dass die Anlagensteuerung daraus abgeleitete Größen wie Drehzahl, Relativposition von Druckrad 8 und Reifen 18, Schlupf, effektiven Abrollradius und dergleichen ermitteln kann.

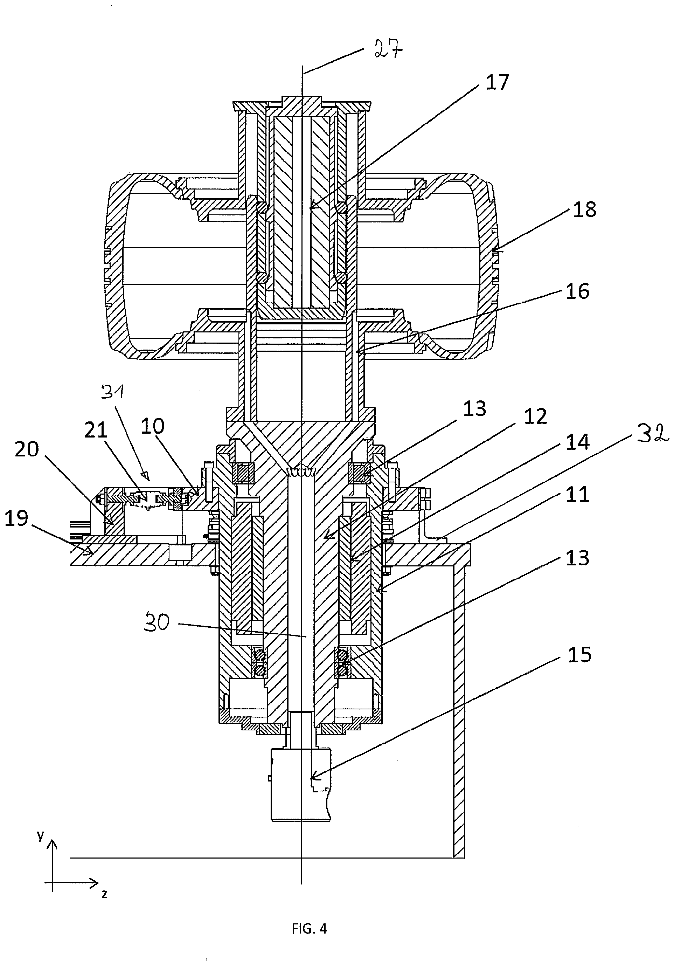

FIG. 4 zeigt einen Schnitt durch den die Messwelle enthaltenden Teil der Messvorrichtung, gemäß Schnittline B-B in der Draufsicht von FIG. 2. Ein weiterer Schnitt längs Schnittlinie C-C ist in FIG. 5 gezeigt. Die Messwelle 12 ist in einem unteren Bereich mittels einer Wälzlagerung 13 in einem topfartigen oder hohlzylindrischen Wellengehäuse 11 drehbar gelagert. Ein zwischen Messwelle 12 und Wellengehäuse 11 angeordneter Elektromotor vom bevorzugten Typ Torquemotor 14 dient zum Antrieb der Messwelle 12. Am oberen Ende der Messwelle 12, welches aus dem Wellengehäuse 11 herausragt, befindet sich die Reifenaufnahme, welche sich im Beispiel aus einem Unterteil 16 mit einer unteren Messfelgenhälfte (auch kurz als Messfelge bezeichnet) und aus einem Oberteil 17 mit einer oberen Messfelgenhälfte zusammensetzt. Dazwischen wird der zu prüfende Reifen 18 eingespannt. Die Messwelle 12 ist als Hohlwelle mit einem im Inneren liegenden Druckluftkanal 30 ausgebildet, der oben in einer innerhalb des Reifens 18 liegenden Auslassöffnung mündet. Am unteren Ende des Druckluftkanals 30 befindet sich eine Drehdurchführung 15 für Füllluft, mit der der Reifen 18 vor der Messung befüllt wird.

Anstelle eine Torquemotors 14 oder Spindelmotors kann auch ein anderer Motor zum Einsatz kommen. Bevorzugt ist aber in jedem Fall ein Direktantrieb der Messwelle 12. Damit ist ein hohes Antriebsmoment möglich. Durch den Entfall einer reibschlüssigen Drehmomentübertragung wie sie etwa bei einem Riemenantrieb vorkommt, werden Störungen bei der Messung vermieden. Der beschriebene Torquemotor 14 ermöglicht zudem eine besonders kompakte Bauweise.

Wie bereits erwähnt, ist die Drehachse 27 der Messwelle 12 im Grundzustand möglichst exakt vertikal ausgerichtet. Durch vorhandene Unwuchten oder Ungleichförmigkeiten im Reifen 18 wirken jedoch Kräfte oder Momente, die die Tendenz haben, die Drehachse 27 aus der Vertikalen zu kippen oder zu neigen. Um derartige Kräfte oder Momente messtechnisch erfassen zu können, ist das die Messwelle 12 aufnehmende Wellengehäuse 11 "weich" oder "schwimmend" gegenüber dem umgebenden Maschinenbett 19 gelagert. Die Wälzlagerung 13 innerhalb des Wellengehäuses 11 ist hingegen möglichst steif und spielfrei, so dass sich die auf die Messwelle 12 einwirkenden Kräfte möglichst unverfälscht und ungedämpft auf das Wellengehäuse 11 übertragen. In einem oberen Bereich des Wellengehäuses 11 ist eine radial von diesem abstehende, im Grundzustand möglichst exakt horizontal ausgerichtete Grundplatte 10 ausgebildet. Die möglichst stabile und steife Grundplatte 10 kann in integraler Bauweise an das Wellengehäuse 11 angeformt oder wie hier im Beispiel mit geeigneten Verbindungsmitteln mit dem Wellengehäuse 11 fest verbunden sein, etwa verschraubt. Die Grundplatte 10 stützt sich wie aus FIG. 4 und 5 ersichtlich mit Hilfe von weiter unten näher beschriebenen, teilweise nachgiebigen oder weichen vertikalen Stützen 31, in die vertikale Kraftaufnehmer 22 integriert sind, auf dem Maschinenbett 19 ab, wodurch die gewünschte weiche Lagerung des Wellengehäuses 11 und der von ihm aufgenommenen Messwelle 12 realisiert ist.

Zugleich wirkt die Grundplatte 10 als Hebelarm, der durch Unwucht oder Ungleichförmigkeit des Reifens 18 bewirkte Kippkräfte oder Kippmomente auf das Wellengehäuse 11 nach außen, zur Peripherie der Grundplatte 10 hin verstärkt. Dadurch im Außenbereich der Grundplatte 10 bewirkte Hebe- oder Senkkräfte in vertikaler Richtung (y-Richtung) werden durch die in die vertikalen Stützen 31 integrierten vertikalen Kraftaufnehmer 22 erfasst. Ferner kann es tendenziell zu einer Auslenkung der Grundplatte 10 in horizontaler (radialer) Richtung kommen, also zu einer Auslenkung oder Verschiebung innerhalb der Plattenebene. Hiervon ist insbesondere eine Auslenkung in Richtung zum Druckrad 8 hin oder davon weg, also in z-Richtung von Interesse, die über zumindest einen horizontalen Kraftaufnehmer 21 erfasst wird, welcher in eine horizontale Stütze 31 integriert zwischen der Grundplatte 10 und einem sich auf dem Maschinenbett 19 abstützenden Lagerblock 20 angeordnet, insbesondere eingespannt ist. Der horizontale Kraftaufnehmer 21 liegt in der Draufsicht gemäß FIG. 2 auf der Verbindungslinie zwischen den Drehachsen 6, 27 von Druckrad 8 und Messwelle 12, und zwar auf der dem Druckrad 8 zugewandten Seite der Grundplatte 10 (hier auch als Vorderseite bezeichnet, während die vom Druckrad 8 abgewandte Seite als Rückseite bezeichnet wird), er könnte aber auch auf der abgewandten Seite liegen oder redundant, sprich auf beiden Seiten, vorhanden sein.

Auslegungsziel für die Konstruktion und Anordnung der Stützen 31 und der Kraftaufnehmer 21, 22 ist es, dass die durch Unwucht und Ungleichförmigkeit eines Reifens 18 verursachten vertikal gerichteten Kräfte auf die Grundplatte 10 an der jeweiligen Umfangsposition möglichst unverfälscht und ungedämpft durch die vertikalen Kraftaufnehmer 22 aufgenommen und erfasst werden, ohne dass dadurch die anderen Stützen 31 und Kraftaufnehmer 21, 22 in nennenswerter Weise beeinflusst zu werden. Entsprechendes gilt für die durch den horizontalen Kraftaufnehmer 21 erfassten Kräfte. Dabei ist ferner zu beachten, dass das Antriebsmoment des Torquemotors 14 oder sonstigen Antriebs der Messwelle 12 zu einem vergleichsweise starken Reaktionsmoment auf das Wellengehäuse 11 und die mit ihr verbundene Grundplatte 10 führt, welches durch eine geeignete Drehmomentstütze 32 abgefangen oder kompensiert werden sollte, um erstens nicht die Integrität der sonstigen Stützen 31 zu gefährden und zweitens nicht die Messungen durch eine vom Antrieb bewirkte Drehung oder Torsion der Grundplatte 10 zu verfälschen. Andererseits sollte die Drehmomentstütze 32 möglichst nur das Antriebsmoment kompensieren und die sonstigen, auf Unwucht und Ungleichförmigkeit des Reifens 18 zurückgehenden Auslenkungen möglichst wenig beeinflussen. Eine dafür geeignete Drehmomentstütze 32 wird weiter unten beschrieben.

Für eine konsequente Umsetzung des geschilderten Messprinzips stützt sich das Wellengehäuse 11 ausschließlich über die Grundplatte 10 und die vertikalen Stützen 31 mit integrierten vertikalen Kraftaufnehmern 22 sowie über gegebenenfalls vorhandene Drehmomentstützen 32 und gegebenenfalls über horizontale Stützen 31 mit integrierten horizontalen Kraftaufnehmern 21, aber nicht direkt selbst auf dem Maschinenbett 19 ab. Das Maschinenbett 19 weist daher bevorzugt, wie in FIG. 5 ersichtlich, eine Ausnehmung auf, durch die das Wellengehäuse 11 hindurchgesteckt ist, ohne an ihm anzuliegen. Vielmehr befindet sich zwischen dem Wellengehäuse 11 und dem Maschinenbett 19 ein umlaufender Spalt.

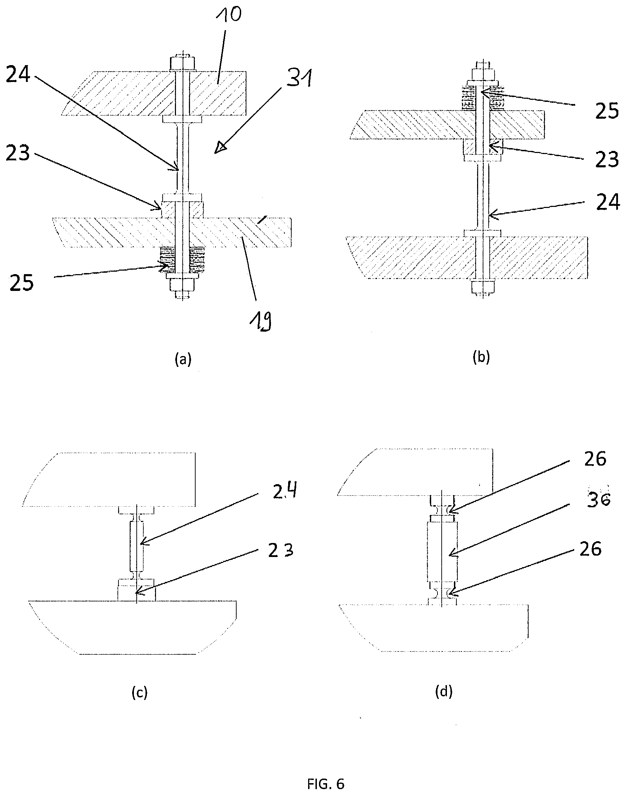

In FIG. 6 sind vier verschiedene vorteilhafte Varianten (a) bis (d) für die vertikalen oder horizontalen Stützen 31 mit den integrierten vertikalen oder horizontalen Kraftaufnehmern 21 oder 22 (in FIG. 6 mit dem für beide Fälle gültigen Bezugszeichen 23 bezeichnet) dargestellt. Allen Varianten gemeinsam ist, dass die jeweilige Stütze 31 einen länglichen Biegestab 24 mit hoher Längssteifigkeit (Axialsteifigkeit) und vergleichsweise geringer Quersteifigkeit aufweist, der zwischen der Grundplatte 10 und dem Maschinenbett 19 fixiert, insbesondere eingespannt ist. Der Kraftaufnehmer 23 ist typischerweise zwischen dem Biegestab 24 und der Grundplatte 10 oder zwischen dem Biegestab 24 und dem Maschinenbett 19 angeordnet, so dass er die auf die Grundplatte 10 wirkenden Kräfte erfasst. Er kann aber auch zwischen einem ersten Biegestab und einem zweiten Biegestab angeordnet sein, wobei die Anordnung insgesamt zwischen der Grundplatte 10 des Wellengehäuses 11 und dem Maschinenbett 19 eingespannt ist. Auf Seiten des Maschinenbetts 19 kann eine Verankerung der jeweiligen Stütze 31 generell direkt oder mittels eines auf dem Maschinenbett 19 verankerten oder daran angeformten Lagerblocks 20 erfolgen.

Generell ist das Verhältnis von Axialsteifigkeit zu Quersteifigkeit für die in den Stützen 31 zum Einsatz kommenden Biegestäbe 24 oder Stäbe bevorzugt > 20. Dies gilt auch für die Biegestäbe 34 der Drehmomentstützen 32 (siehe unten). Ein Einsatz der Biegestäbe 24, 34 im Bereich der linearen Federkennlinie ist bevorzugt, was bei bekannter Größenordnung der einwirkenden Kräfte, die räumliche Dimensionierung der Biegestäbe impliziert.

Der Kraftaufnehmer 23 kann wie in Variante (a) und (b) durch ein die Grundplatte 10 oder das Maschinenbett 19 durchdringendes Stabelement mit einem auf der anderen Seite angeordneten federartigen Vorspannelement 25 vorgespannt sein. Bei Variante (a) sitzt der Kraftaufnehmer 23 auf der Oberseite des Maschinenbetts 19, und das Vorspannelement 25 stützt sich unterhalb des Maschinenbetts 19 an diesem ab. Bei Variante (b) sitzt der Kraftaufnehmer 23 an der Unterseite der Grundplatte 10, während das Vorspannelement 25 oben auf der Grundplatte 10 sitzt. Die Einstellung und Fixierung der Vorspannung kann beispielsweise durch geeignete Schraubelemente und/oder Muttern erfolgen. Bei der Variante (c), die auch mit den Varianten (a) und (b) kombiniert sein kann, ist die Biegesteifigkeit des Biegestabs 24 in Querrichtung durch Einschnürungen mit vermindertem Stabdurchmesser herabgesetzt. Bei der Variante (d) sitzt ein vorgespannter Kraftaufnehmer 23 zwischen zwei Federgelenken 26.

Der horizontale Kraftaufnehmer 21 ist wie bereits erwähnt in analoger Weise zu den vertikalen Kraftaufnehmern 22 in eine horizontale Stütze 31 integriert und zwischen der Grundplatte 10 und dem ihm zugeordneten Lagerblock 20 auf dem Maschinenbett 19 angeordnet, insbesondere mit Vorspannung zwischen beiden Komponenten eingespannt.

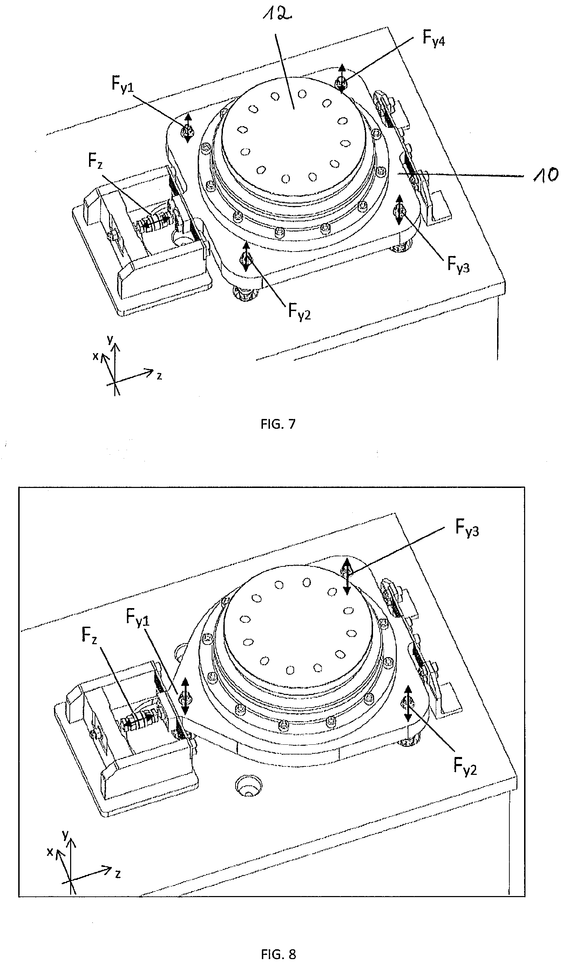

FIG. 7 zeigt einen Blick von schräg oben auf die Messwelle 12, wobei des Überblicks halber die Reifenaufnahme weggelassen wurde. Gezeigt ist eine vorteilhafte Konfiguration mit vier vertikalen Messaufnehmern (hier charakterisiert durch die erfassten Kräfte F_{y1}, F_{y2}, F_{y3}, F_{y4}) und einem horizontalen Messaufnehmer (F_{z}). Der horizontale Messaunehmer (F_{z}) befindet sich wie bereits erwähnt vom Druckrad 8 aus gesehen an der Vorderseite der Grundplatte 10. Die vier vertikalen Messaufnehmer (F_{y1}, F_{y2}, F_{y3}, F_{y4}) befinden sich an den Eckpunkten eines gedachten Rechteckes, insbesondere eines Quadrates um die Messwelle 12 herum, zwei davon auf der Vorderseite, zwei auf der Rückseite. Die Grundplatte 10 ist dazu vorzugsweise entsprechend geformt, mit rechteckigem oder quadratischem Umriss. Sie könnte aber auch anders geformt sein, beispielsweise Ausbuchtungen oder Einbuchtungen aufweisen, solange nur die gewünschte Anordnung der Kraftaufnehmer verwirklicht werden kann. Eine weitgehend symmetrische Formgebung der Grundplatte 10 vermeidet statische Ungleichgewichte durch ungleiche Massenverteilung.

FIG. 8 zeigt eine Variation des Messaufbaus derart, dass an der Vorderseite nur ein vertikaler Messaufnehmer (F_{y1}) angeordnet ist, und zwar mittig auf der Verbindungslinie zwischen den Drehachsen 6, 27 von Druckrad 8 und Messwelle 12. Die Positionen der beiden anderen vertikalen Kraftaufnehmer (F_{y2}, F_{y3}) und des horizontalen Kraftaufnehmers (F_{z}) bleiben wir zuvor. Damit gibt es insgesamt nur drei vertikale Kraftaufnehmer (F_{y1}, F_{y2}, F_{y3}) auf einer Dreiecksanordnung um die Messwelle 12 herum.

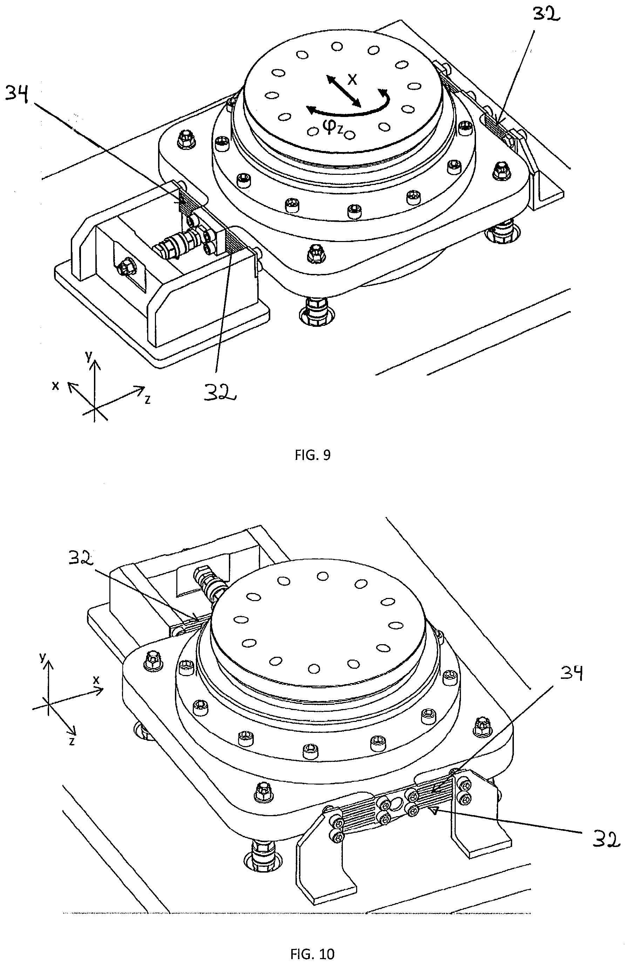

FIG. 9 und 10 zeigen zwei weiteren Ansichten des aus FIG. 7 bekannten Messaufbaus, diesmal allerdings unter Betonung der vorderen Drehmomentstütze 32 (FIG. 9) und der hinteren Drehmomentstützen 32 (FIG. 10), die hier wie bereits beschrieben zur Kompensation des Antriebsmoments des Torquemotors 14 oder sonstigen Antriebs vorgesehen sind. Anstelle einer ersten Drehmomentstütze 32 an der Vorderseite der Grundplatte 10 und einer zweiten Drehmomentstütze 32 an der Rückseite der Grundplatte 10 könnte auch nur eine davon vorhanden sein, oder es könnte weitere Exemplare davon geben, ggf. auch an einer oder an beiden der Längsseiten der Grundplatte 10 oder nur dort. Ähnliches gilt für den Messaufbau aus FIG. 8. Auch hier könnte es prinzipiell 1, 2, 3 oder 4 (oder sogar mehr) Drehmomentstützen 32 an beliebiger Position um die Grundplatte 10 herum geben, aber eine vordere und/oder eine hintere Drehmomentstütze 32 sind bevorzugt.

Übereinstimmendes Merkmal aller Varianten ist, dass die jeweilige Drehmomentstütze 32 eine (weitere) Abstützung der Grundplatte 10 auf dem Maschinenbett 19 ausbildet und derart ausgelegt ist, dass sie eine Rotation der Grundplatte 10 in Pfeilrichtung (ϕ) möglichst unterbindet, alle anderen Kräfte und damit zusammenhängenden Bewegungstendenzen jedoch möglichst ungestört zulässt. Zugleich muss die Stütze stabil genug sein, um die üblichen betrieblichen Lasten sicher aufzunehmen (Sicherheit gegen Knicken). Dazu weist die Drehmomentstütze 32 bevorzugt eine Anzahl länglicher Biegestäbe 34 auf, die an einem Ende möglichst weit außen Umfang der Grundplatte 10 fixiert sind, in einer horizontalen Ebene liegen, in Drehrichtung der Messwelle 12 (d. h in Umfangsrichtung) ausgerichtet sind, und sich am anderen Ende an einem Lagerblock 35 des Maschinenbetts 19 abstützen. Die Längssteifigkeit (Axialsteifigkeit) der Biegestäbe 34 ist deutlich größer als deren Quersteifigkeit, so dass der gewünschte Effekt erzielt wird.

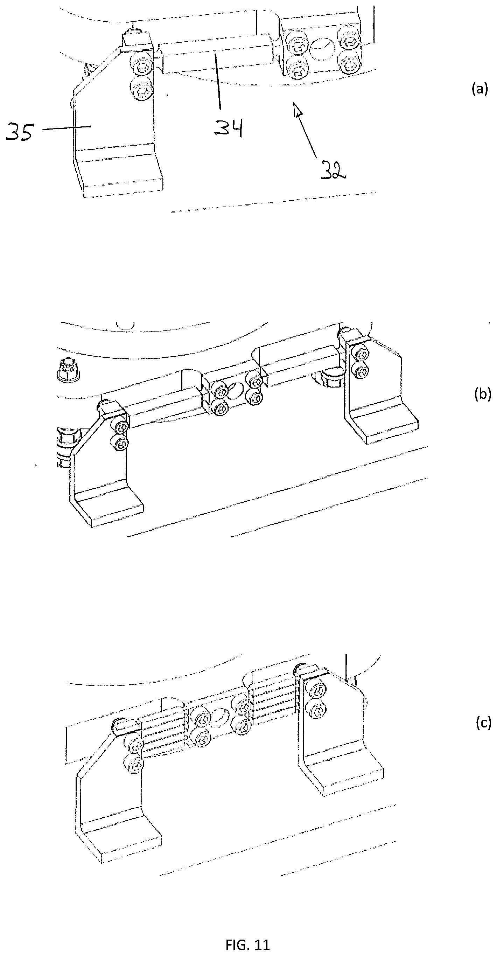

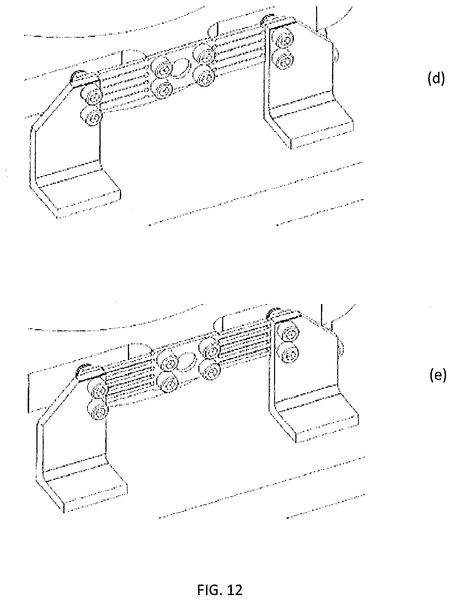

FIG. 11 und 12 zeigen fünf mögliche Varianten (a) bis (e) einer konkreten Realisierung der Drehmomentstütze 32, die untereinander beliebig kombinierbar sind. Variante (a) zeigt einen einseitig angeordneten Stützstab oder Biegestab 34, während die anderen Varianten beidseitig ausgebildet und damit symmetrisiert sind. Die Stäbe können mit den jeweiligen Durchmesser reduzierenden Einschnürungen versehen sein für eine hohe Nachgiebigkeit in Querrichtung bei gleichzeitig hoher Steifigkeit und Knickstabilität in Längsrichtung. Die Einschnürungen werden typischerweise spanabhebend (z. B. durch Drehen oder Fräsen) gefertigt. Bei Variante (c) erfolgt eine Aufteilung der Gesamtquerschnittsfläche auf mehrere parallele Stäbe mit einem insgesamt höheren Verhältnis von Axialsteifigkeit zu Quersteifigkeit bei kürzerer Baulänge. Variante (d) eignet sich für eine vereinfachte Fertigung, da die Einschnürungen der Stäbe hier nur in einer Raumrichtung ausgebildet sind - und somit keine spanende Bearbeitung erforderlich ist. Variante (d) zeigt eine vereinfachte Gestaltung der Stäbe ohne Einschnürungen, was im Hinblick auf das genannte Auslegungsziel durch einen dünneren Querschnitt und eine größere Anzahl paralleler Stäbe kompensiert wird.

Sämtliche der genannten Kraftaufnehmer 21, 22 sind bevorzugt Einkomponenten-Kraftaufnehmer, erfassen also von einer beliebigen vektoriellen Kraft nur eine Kraftkomponente in einer durch ihre Bauart und Ausrichtung vorgegebenen Raumrichtung. Es handelt sich bevorzugt um Sensoren, die ein für die erfasste Kraft bzw. deren Stärke charakteristisches Sensorsignal ausgeben, welches in der zugehörigen Anlagensteuerung verarbeitet und ausgewertet werden kann.

Denkbar als Kraftaufnehmer sind mit Dehnungsmessstreifen bestückte Kraftmesselemente oder Stützstrukturen. Dehnungsmessstreifen (DMS; engl. strain gauge) sind Messeinrichtungen zur Erfassung von dehnenden und stauchenden Verformungen. Sie ändern schon bei geringen Verformungen ihren elektrischen Widerstand und werden als Dehnungssensoren eingesetzt. Man klebt sie üblicherweise (ohne Vorspannung) mit Spezialkleber auf Bauteile, die sich unter Belastung minimal verformen. Diese Verformung (Dehnung) führt dann zur Veränderung des Widerstands des DMS, die gemessen werden kann.

Bevorzugt werden als Kraftaufnehmer jedoch piezoelektrische Sensoren verwendet, die mit dem piezoelektrischen Effekt arbeiten und typischerweise auf eine angelegte Kraft oder mechanische Spannung eine elektrische Spannung erzeugen. Ein Vorteil piezoelektrischer Sensoren liegt darin, unterschiedliche Verstärkerempfindlichkeiten für Gleichförmigkeitsmessung einerseits und Unwuchtmessung andererseits einstellen zu können. Bei einer Gleichförmigkeitsmessung wirken typischerweise um einen Faktor 10 höhere Kräfte als bei einer Unwuchtmessung, so dass im letzteren Fall eine höhere Empfindlichkeit bzw. Messauflösung vorteilhaft ist (Umschalten des Messbereichs). Piezo-basierte Kraftaufnehmer lassen sich wie beschrieben mit Vorspannung montieren bzw. einbauen, was eine Kraftmessung in Zug- und Druckrichtung ermöglicht.

Ein wesentlicher Vorteil des beschriebenen Messaufbaus ist neben der Verwendung einfacher Einkomponenten-Kraftaufnehmer darin zu sehen, dass die Kraftaufnehmer 21, 22, mit denen sowohl eine Unwucht- als auch eine Gleichförmigkeitsmessung erfolgen kann, ausschließlich an der Messwelle 12 angeordnet sind. Für das Druckrad 8 sind keine Kraftaufnehmer erforderlich. Damit ist eine fliegende Lagerung des Druckrades 8 möglich, mit dem Vorteil geringer Bauhöhe bei zugleich einfachem Austausch des Druckrades 8.

### Bezugszeichenliste

- 1: Baugruppe Druckrad mit Schlitten und Verstellantrieb
- 2: Baugruppe Messwelle mit Antrieb, Messeinheit, Reifenaufnahme, Reifen
- 3: Trägerplatte
- 4: Linearführung
- 5: Antriebspindel
- 6: Drehachse
- 7: Lagerung
- 8: Druckrad
- 9: Winkelmessvorrichtung
- 10: Grundplatte
- 11: Wellengehäuse
- 12: Messwelle
- 13: Wälzlagerung
- 14: Torquemotor
- 15: Drehdurchführung für Füllluft
- 16: Unterteil der Reifenaufnahme
- 17: Oberteil der Reifenaufnahme
- 18: Reifen
- 19: Maschinenbett
- 20: Lagerblock
- 21: horizontaler Kraftaufnehmer
- 22: vertikaler Kraftaufnehmer
- 23: horizontaler oder vertikaler Kraftaufnehmer
- 24: Biegestab
- 25: Vorspannelement
- 26: Federgelenk
- 27: Drehachse
- 28: Schlitten
- 29: Verstellantrieb
- 30: Druckluftkanal
- 31: Stütze
- 32: Drehmomentstütze
- 34: Biegestab
- 35: Lagerblock
- 36: vorgespannter Kraftaufnehmer

## Patentansprüche

1. Messvorrichtung zur Vermessung von Reifen (18), insbesondere von Kraftfahrzeugreifen, hinsichtlich Unwucht und/oder Gleichförmigkeit, mit einer in einem topfförmigen oder hohlzylindrischen Wellengehäuse (11) gelagerten Messwelle (12), die an einem aus dem Wellengehäuse (11) herausragenden Ende eine Aufnahme für einen Reifen (18) aufweist, wobei die Messwelle (12) eine senkrecht ausgerichtete Drehachse (27) aufweist, wobei von dem Wellengehäuse (11) eine angeformte oder fest mit ihm verbundene Grundplatte (10) radial absteht, wobei sich die Grundplatte (10) mittels einer Mehrzahl von über ihren Umfang verteilt angeordneten, vertikal ausgerichteten Stützen (31) auf einem Maschinenbett (19) abstützt, wobei die Axialsteifigkeit der jeweiligen Stütze (31) deutlich größer als ihre Quersteifigkeit ist, und wobei der jeweiligen Stütze (31) ein vertikaler Kraftaufnehmer (22) zur sensorischen Erfassung einer auf die Stütze (31) einwirkenden vertikalen Kraftkomponente zugeordnet ist.

2. Messvorrichtung nach Anspruch 1, wobei drei oder vier Stützen (31) mit zugeordneten vertikalen Kraftaufnehmern (22) über den Umfang der Grundplatte (10) hinweg verteilt angeordnet sind.

3. Messvorrichtung nach Anspruch 1 oder 2, wobei die jeweilige Stütze (31) einen vertikal ausgerichteten Biegestab (24) aufweist, der bevorzugt eine Anzahl von Einschnürungen aufweist.

4. Messvorrichtung nach einem der vorangehenden Ansprüche, wobei der jeweilige vertikale Kraftaufnehmer (22) in die ihm zugeordnete Stütze (31) integriert ist oder an ihr anliegt und bevorzugt durch ein Vorspannelement (25) vorgespannt ist.

5. Messvorrichtung nach einem der vorangehenden Ansprüche, wobei der jeweilige vertikale Kraftaufnehmer (22) ein Einkomponenten-Kraftaufnehmer, insbesondere vom Typ Piezo-Kraftaufnehmer ist.

6. Messvorrichtung nach einem der vorangehenden Ansprüche, wobei zwischen der Grundplatte (10) und einem auf dem Maschinenbett (19) angeordneten Lagerblock (20) mindestens eine horizontale Stütze (31) mit einem zugeordneten oder integrierten horizontalen Kraftaufnehmer (21) zur sensorischen Erfassung einer auf die Grundplatte (10) einwirkenden horizontalen Kraftkomponente angeordnet ist.

7. Messvorrichtung nach Anspruch 6, wobei die jeweilige horizontale Stütze (31) einen horizontal ausgerichteten Biegestab (24) aufweist, der bevorzugt eine Anzahl von Einschnürungen aufweist.

8. Messvorrichtung nach Anspruch 6 oder 7, wobei der horizontale Kraftaufnehmer (21) ein Einkomponenten-Kraftaufnehmer, insbesondere vom Typ Piezo-Kraftaufnehmer ist.

9. Messvorrichtung nach einem der Ansprüche 6 bis 8, wobei der horizontale Kraftaufnehmer (21) entlang der Verbindungslinie zwischen der Drehachse (27) der Messwelle (12) und der Drehachse (6) eines zugeordneten Druckrades (8) ausgerichtet ist.

10. Messvorrichtung nach einem der vorangehenden Ansprüche, wobei die Grundplatte (10) sich über zumindest eine Drehmomentstütze (32) in solcher Weise auf dem Maschinenbett (19) abstützt, dass ein durch einen Antrieb für die Messwelle (12) bewirktes Antriebsmoment kompensiert wird, sonstige auf die Grundplatte (10) einwirkenden Kraftkomponenten jedoch möglichst wenig beeinflusst werden.

11. Messvorrichtung nach Anspruch 9, wobei die Drehmomentstütze (32) einen in Tangentialrichtung bezüglich der Messwelle (12) an der Grundplatte (10) angreifenden, horizontal ausgerichteten Biegestab (34) aufweist, dessen Axialsteifigkeit deutlich größer als seine Quersteifigkeit ist, und der bevorzugt eine Anzahl von Einschnürungen aufweist.

12. Messvorrichtung nach einem der vorangehenden Ansprüche, mit einem Druckrad (8), welches mit einem in der Aufnahme fixierten Reifen (18) in Kontakt bringbar ist.

13. Messvorrichtung nach einem der vorangehenden Ansprüche, wobei in dem Wellengehäuse (11) ein Direktantrieb, vorzugsweise ein Torquemotor (14), für die Messwelle (12) angeordnet ist.

14. Messvorrichtung nach einem der vorangehenden Ansprüche, wobei sich das Wellengehäuse (11) ausschließlich über die Grundplatte (10) und die vertikalen und/oder horizontalen Stützen (31) sowie über gegebenenfalls vorhandene Drehmomentstützen (32) und nicht direkt auf dem Maschinenbett (19) abstützt.

15. Messvorrichtung nach einem der vorangehenden Ansprüche mit einer Auswertungsvorrichtung, die aus Messignalen der vertikalen Kraftaufnehmer (22) und eines oder mehrerer gegebenenfalls vorhandener horizontaler Kraftaufnehmer (21) für die Unwucht und/oder Gleichförmigkeit eines Reifens (18) charakteristische Kenngrößen ermittelt.
